(19) Europäisches Patentamt

**European Patent Office**

**Office européen des brevets**

(11) Veröffentlichungsnummer: **0 277 295 B1**

(12) **EUROPÄISCHE PATENTSCHRIFT**

(45) Veröffentlichungstag der Patentschrift: **17.04.91**

(21) Anmeldenummer: **87116905.8**

(22) Anmeldetag: **17.11.87**

(51) Int. Cl.⁵: **B60J 7/08, B60J 7/20**

(54) **Festes Klappdach für einen Personenwagen.**

(30) Priorität: **31.01.87 DE 3702901**

(43) Veröffentlichungstag der Anmeldung:
**10.08.88 Patentblatt 88/32**

(45) Bekanntmachung des Hinweises auf die
Patenterteilung:
**17.04.91 Patentblatt 91/16**

(84) Benannte Vertragsstaaten:
**CH DE FR GB IT LI SE**

(56) Entgegenhaltungen:

**POPULAR MECHANICS MAG., Band 106, Nr.
6, Dezember 1956, Seite 139; "Home-built
hardtop convertible"**

(73) Patentinhaber: **Dr.Ing.h.c. F. Porsche Aktiengesellschaft
Porschestrasse 42
W-7000 Stuttgart 40(DE)**

(72) Erfinder: **Eyb, Wolfgang
Justinus-Kerner-Strasse 5
W-7250 Leonberg(DE)**

Rank Xerox (UK) Business Services

**Beschreibung**

Die Erfindung bezieht sich auf ein festes Klappdach für einen Personenkraftwagen, das sich von einem Windschutzscheibenrahmen bis zu einem Heckdeckel erstreckt und um eine feststehende, quer zur Fahrzeuglängsrichtung verlaufende Drehachse von einer Schließstellung in eine Offenstellung verschwenkbar ist und umgekehrt, wobei ein in Fahrtrichtung gesehen sich im wesentlichen hinter einer Seitentür erstreckender, kuppelförmiger Endbereich des Klappdachs mit einem unteren Rand an den Heckdeckel herangeführt ist.

Ein Klappdach der eingangs genannten Gattung geht aus der US-A-2 869 923 hervor. Dieser Anordnung haftet der Nachteil an, daß das Klappdach, insbesondere im Bereich seiner Anlenkung an die Karosserie, keine ausreichende Steifigkeit aufweist, so daß im Fahrbetrieb störende Verwindungen am unteren Rand des kuppelförmigen Endbereiches des Klappdaches auftreten können, die unter Umständen Funktionsbeeinträchtigungen nach sich ziehen. Ferner ist bei geöffnetem Klappdach der Raum zwischen den Sitzen und dem Heckdeckel unabgedeckt.

Aufgabe der Erfindung ist es, an einem Klappdach solche Vorkehrungen zu treffen, daß bei guter Funktion die Steifigkeit des Klappdaches, insbesondere im kuppelförmigen Endbereich, verbessert wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung eines plattenförmigen Elementes benachbart dem unteren Rand des kuppelförmigen Endbereichs eine Erhöhung der Steifigkeit des Klappdachs erzielt wird, so daß die Verwindungen im Fahrbetrieb wesentlich reduziert werden und somit eine gute Funktion des Klappdachs gegeben ist.

Durch das plattenförmige Element, das fest mit dem Klappdach verbunden ist, wird außerdem in Schließstellung des Klappdachs eine zusätzliche Ablage zur Aufnahme von Gegenständen geschaffen. In Offenstellung des Klappdachs bildet eine außenliegende Begrenzungsfläche des plattenförmigen Elementes eine abschnittsweise Abdeckung des Fahrgastraumes, so daß der Raum zwischen den angrenzenden Sitzen und dem Heckdeckel zumindest von der Oberseite her verschlossen ist. Das plattenförmige Element ist vorzugsweise einstückig mit dem Klappdach hergestellt. Durch die Anformungen am vorderen und hinteren Ende des plattenförmigen Elementes wird sowohl in der Schließstellung als auch in der Offenstellung eine einwandfreie Dichtung zwischen dem Klappdach und dem Heckdeckel erzielt.

Ein Ausführungsbeispiel der Erfindung ist in der Zeichnung dargestellt und wird im folgenden näher erläutert.

Es zeigt

Fig. 1     eine Teilseitenansicht auf einen Personenwagen mit einem sich in Schließstellung befindlichen festen Klappdach,

Fig. 2     eine weitere Teilseitenansicht des Personenwagens mit geöffnetem Klappdach, teilweise im Schnitt,

Fig. 3     eine Teildraufsicht auf Fig. 1 mit dem Klappdach und dem Heckdeckel,

Fig. 4     einen Schnitt nach der Linie IV-IV der Fig. 3 mit dem erfindungsgemäßen plattenförmigen Element,

Fig. 5     einen Schnitt entsprechend Fig. 4 mit einer anderen Ausführungsform des plattenförmigen Elementes.

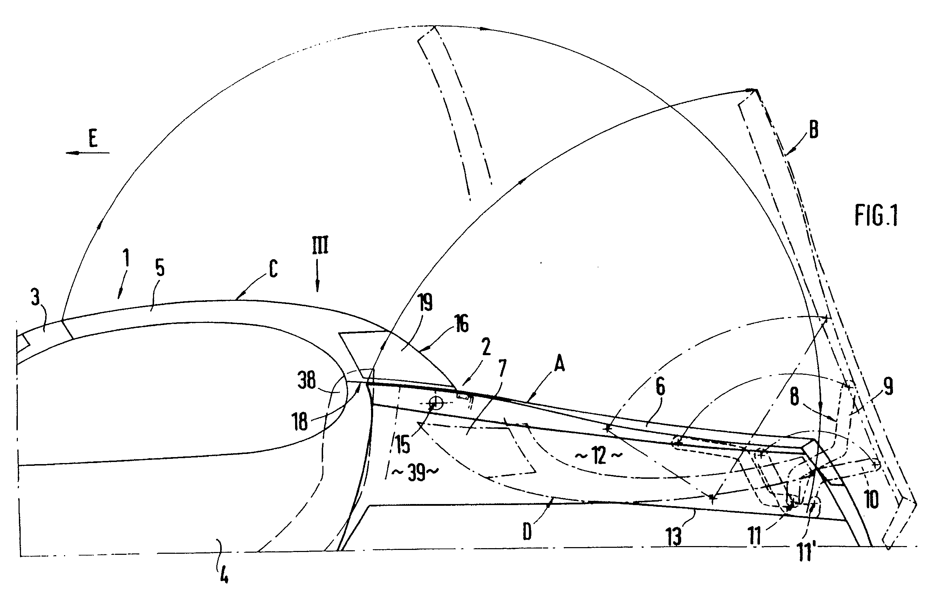

Der in Fig. 1 gezeigte Personenkraftwagen 1 weist einen Aufbau 2 auf, der im dargestellten Bereich einen Windschutzscheibenrahmen 3, eine Seitentür 4, ein Klappdach 5, einen Heckdeckel 6 und eine Seitenwand 7 umfaßt. Der Heckdeckel 6 ist unter Vermittlung von Viergelenkscharnieren 8 von einer geschlossenen Stellung A in eine geöffnete Stellung B bewegbar und umgekehrt. Jedes Viergelenkscharnier 8 umfaßt zwei Hebel 9, 10, die einerseits mit dem Heckdeckel 6 und andererseits mit dem Aufbau 2 verbunden sind. Der Heckdeckel 6 ist um die Drehpunkte 11, 11' nach hinten verschwenkbar, wobei die geöffnete Stellung B des Heckdeckels 6 in Fig. 1 strichpunktiert dargestellt ist.

Unterhalb des Heckdeckels 6 erstreckt sich ein Stauraum 12, der einerseits durch eine etwa horizontal verlaufende Bodenwand 13 und andererseits durch den darüberliegenden Heckdeckel 6 definiert ist.

Das aus Kunststoff, Metall oder dergleichen gefertigte, vorzugsweise einstückig ausgebildete, feste Klappdach 5 erstreckt sich vom Windschutzscheibenrahmen 3 bis etwa zu einem vorderen Ende 14 des angrenzenden Heckdeckels 6. Das Klappdach 5 ist in seiner Schließstellung C am Windschutzscheibenrahmen 3 unter Vermittlung von nicht näher dargestellten Verschlüssen in Lage gehalten. Nach Lösen dieser Verschlüsse und Verschwenken des Heckdeckels 6 in seine Offenstellung B läßt sich das Klappdach 5 um eine quer zur Fahrzeuglängsrichtung verlaufende, horizontal ausgerichtete Drehachse 15 nach hinten in eine Offenstellung D verschwenken, in der es sich innerhalb des Stauraumes 12 befindet. Die feststehende Drehachse 15 ist in Fahrtrichtung E gesehen, hinter den Seitentüren 4 angeordnet, und zwar in einem oberen Bereich der Seitenwand 7.

Ein sich im wesentlichen hinter der Seitentür 4 erstreckender, kuppelförmiger Endbereich 16 des Klappdachs 5 ist mit einem unteren Rand 17 an einen hochgezogenen Abschnitt 18 der Seitentür 4 und an das vordere Ende 14 des angrenzenden Heckdeckels 6 herangeführt, wobei der kuppelförmige Endbereich 16 mit einer durchsichtigen Heckscheibe 19 versehen ist.

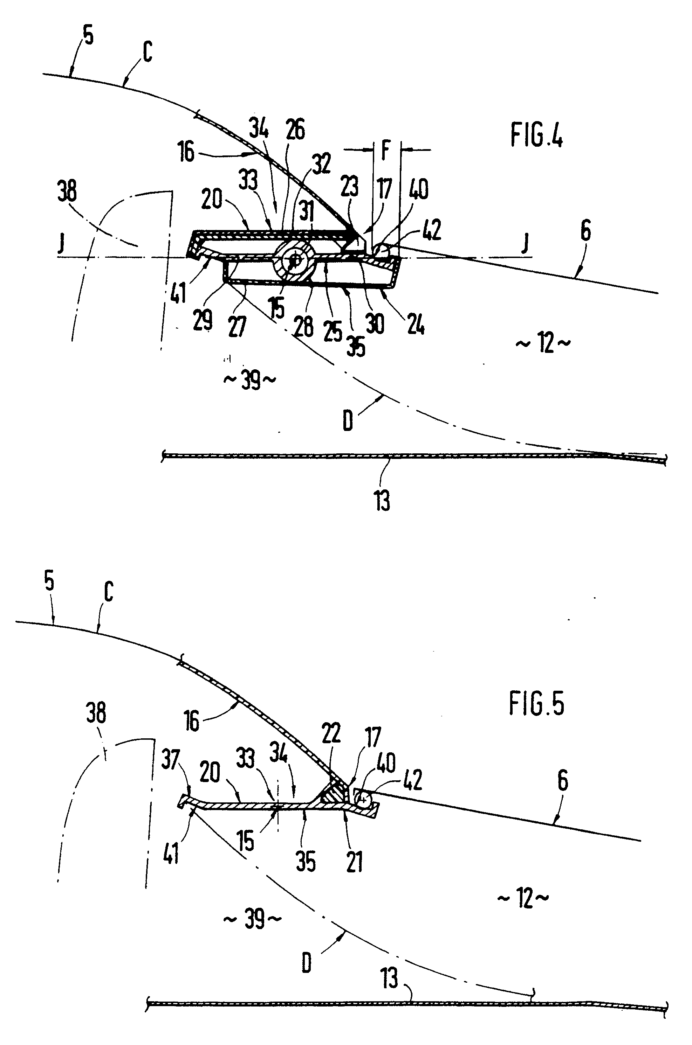

Zur Erhöhung der Verwindungssteifigkeit des Klappdachs 5 - insbesondere im hintenliegenden, kuppelförmigen Endbereich 16 - weist dieses benachbart dem unteren Rand 17 des kuppelförmigen Endbereiches 16 ein plattenförmiges Element 20 auf, das annähernd horizontal ausgerichtet und zumindest mit einem in Fahrtrichtung gesehen, hintenliegenden Ende fest mit dem Klappdach 5 verbunden ist, wobei sich das plattenförmige Element 20 vorzugsweise über die gesamte Breite des kuppelförmigen Endbereiches 16 erstreckt (Fig. 4 und 5). Die Drehachse 15 des Klappdachs 5 erstreckt sich - in einer Fahrzeuglängsmittelebene H-H gesehen - innerhalb des plattenförmigen Elementes 20, vorzugsweise in einer Mittelquerebene J-J d. h., etwa in der Mitte der Höhen- und Längserstreckung des plattenförmigen Elementes 20 (Fig. 4).

Gemäß Fig. 5 ist das plattenförmige Element 20 einstückig mit dem aus Kunststoff gefertigten Klappdach 5 ausgebildet. Im Verbindungsbereich des Klappdachs 5 mit dem plattenförmigen Element 20 ist bei 21 ein Schaumkern 22 in das Werkzeug eingelegt, der beispielsweise trapezförmig ausgebildet sein kann.

Entsprechend Fig. 4 wird das plattenförmige Element 20 durch ein separates Teil gebildet, das durch Kleben, Schweißen oder dergleichen mit einem randseitig angeordneten, kastenförmigen Träger 23 des Klappverdecks 5 verbunden ist. Das plattenförmige Element 20 kann als mehrteiliger Hohlträger 24 ausgebildet sein, der ein Mittelteil 25 umfaßt, das von einer Oberschale 26 und einer Unterschale 27 umgeben ist. Das Mittelteil 25 weist in einem mittleren Bereich einer Längserstreckung einen rohrförmigen Abschnitt 28 auf, von dem aus sich zu beiden Seiten Stege 29, 30 erstrecken. Der rohrförmige Abschnitt 28 dient zur Aufnahme eines die Drehachse 15 bildenden Lagerelementes 31 und kann sich entweder über die gesamte Breite oder aber nur in seitlichen außenliegenden Bereichen des plattenförmigen Elementes 20 erstrecken. Die am Klappdach 5 angebrachten Lagerelemente 31 wirken mit nicht näher dargestellten, aufbauseitig angebrachten Drehlagern zusammen.

Die Oberschale 26 ist gemäß Fig. 4 mit einem Bezug 32 versehen, wobei eine in Schließstellung C des Klappdachs 5 obenliegende Begrenzungsfläche 33 eine Ablage 34 zur Unterbringung von Gegenständen bildet. Gemäß Fig. 5 ist ein in Fahrtrichtung E gesehen vorneliegendes Ende 37 des plattenförmigen Elementes 20 bzw. der Begrenzungsfläche 33 schräg nach oben gezogen, wodurch eine schalenförmige Ablage 34 erzielt wird.

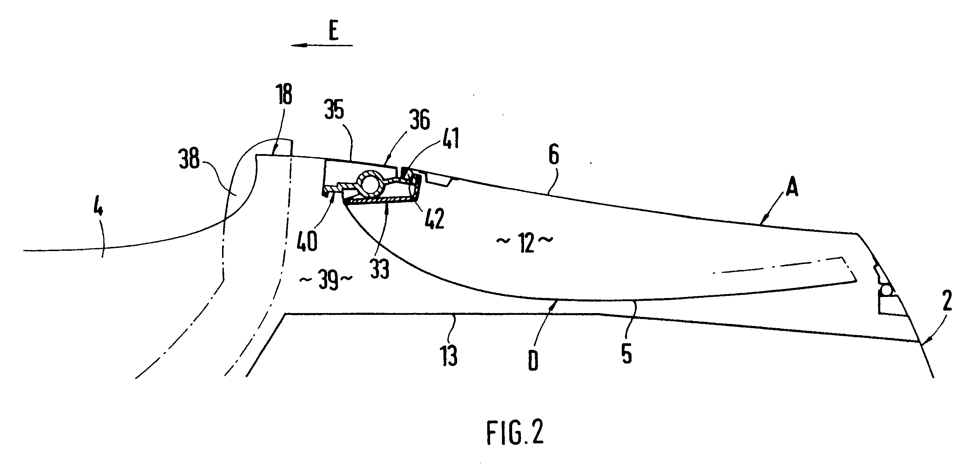

Die Unterschale 27 ist entsprechend Fig. 2 so gestaltet, daß bei geöffnetem Klappdach D eine außenliegende Begrenzungsfläche 35 des plattenförmigen Elementes 20 eine in Fahrtrichtung gesehen vor dem Heckdeckel 6 liegende Abdeckung 36 darstellt. Die außenliegende Begrenzungsfläche 35 verläuft vorzugsweise außenhautbündig mit dem dahinterliegenden Heckdeckel 6. Das der Heckscheibe 19 abgekehrte Ende 37 des plattenförmigen Elementes 20 erstreckt sich benachbart einer Rückenlehne 38 eines angrenzenden Sitzes.

Durch die Abdeckung 36 wird eine zwischen der Rückenlehne 38 und dem vorderen Ende 14 des Heckdeckels 6 sich erstreckender Teilbereich eines Fahrgastraumes 39 verschlossen.

Das plattenförmige Element 20 weist in einem Längsmittelschnitt gesehen - an seinen sich in Fahrzeuglängsrichtung erstreckenden Enden - je eine U-oder L-förmig profilierte Aufnahme 40, 41 auf, wobei je nach Stellung des Klappdaches 5 eine dieser Aufnahmen 40, 41 eine Anlagefläche für einen Dichtkörper 42 des benachbarten Heckdeckels 6 bildet.

Der schlauchförmig oder lippenförmig ausgebildete Dichtkörper 42 ist am vorderen Ende 14 des Heckdeckels 6 angebracht, wobei der Heckdeckel 6 das plattenförmige Element 20 um einen Betrag F übergreift (Fig. 4).

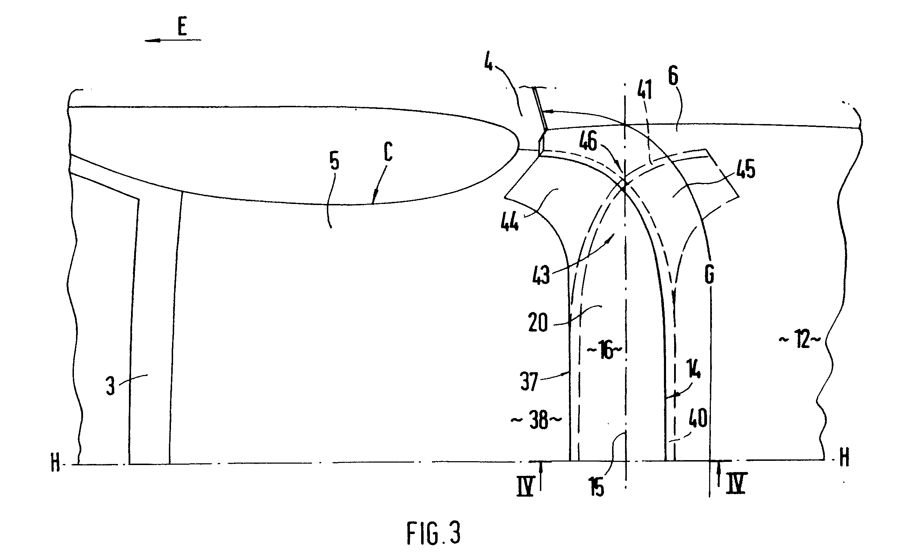

In Schließstellung des Klappdachs 5 wirkt der Dichtkörper 42 mit der das Klappdach 5 überragenden Aufnahme 40 zusammen, wogegen bei geöffnetem Klappdach D die Aufnahme 41 mit dem Dichtkörper 42 in Wirkverbindung steht. Die Aufnahme 40, die außerhalb des kuppelförmigen Endbereiches 16 angeordnet ist, verläuft etwa parallel zum vorderen Ende 14 des Deckels 6, wobei das vordere Ende 14 in der Draufsicht gesehen, einen bogenförmigen Verlauf aufweist (Fig. 3).

Damit auch bei geöffnetem Klappdach 5 eine gute Abdichtung zwischen dem plattenförmigen Element 20 und der Heckklappe 6 gewährleistet ist, verläuft die Aufnahme 41 in der Draufsicht gesehen, spiegelbildlich zur Aufnahme 40, wobei die Drehachse 15 die Symmetrieachse bildet. Das plattenförmige Element 20 weist in seitlich außenliegenden Bereichen 43 spiegelbildlich zur Drehachse 15 verlaufende, bogenförmige Endabschnitte 44, 45 auf, wobei in Schließstellung C des Klappdachs 5 die Aufnahme 40 an dem in Fahrtrichtung zeigenden Endabschnitt 44 angeordnet ist. Seitlich außenliegende Bereiche der Aufnahme 41 sind nach hinten gerichtet - entgegen der Fahrtrichtung - und am bogenförmigen Endabschnitt 45 vorgesehen. Die beiden Aufnahmen 40, 41 schneiden sich bei 46 im Bereich der Drehachse 15.

## Ansprüche

1. Festes Klappdach (5) für einen Personenkraftwagen, das sich von einem Windschutzscheibenrahmen (3) bis zu einem Heckdeckel (6) erstreckt und um eine feststehende, quer zur Fahrzeuglängsrichtung (E) verlaufende Drehachse (15) von einer Schließstellung (C) in eine Offenstellung (D) verschwenkbar ist und umgekehrt, wobei ein in Fahrtrichtung (E) gesehen sich im wesentlichen hinter einer Seitentür (4) erstreckender, kuppelförmiger Endbereich (16) des Klappdachs (5) mit einem unteren Rand (17)an den Heckdeckel (6) herangeführt ist, dadurch gekennzeichnet, daß benachbart dem unteren Rand (17) des kuppelförmigen Endbereichs (16) ein plattenförmiges Element (20) angeordnet ist, das etwa horizontal ausgerichtet und zumindest mit einem in Fahrtrichtung gesehen hintenliegenden Ende fest mit dem Klappdach (5) verbunden ist, wobei sich das plattenförmige Element (20) vorzugsweise über die gesamte Breite des kuppelförmigen Endbereichs (16) erstreckt.

2. Klappdach nach Anspruch 1, dadurch gekennzeichnet, daß innerhalb des plattenförmigen Elementes (20) die Drehachse (15) des Klappdachs (5) verläuft, wobei die Drehachse (15) etwa in einer Mittelebene (J-J) des plattenförmigen Elementes (20) angeordnet ist.

3. Klappdach nach Anspruch 1, dadurch gekennzeichnet, daß in Schließstellung (C) des Klappdaches (5) eine obere Begrenzungsfläche (33) des plattenförmigen Elementes (20) eine Ablage (34) bildet, wogegen eine in Offenstellung (D) des Klappdachs (5) außenliegende Begrenzungsfläche (35) des plattenförmigen Elementes (20) eine in Fahrtrichtung (E) gesehen vor dem Heckdeckel (6) liegende Abdeckung (36) darstellt.

4. Klappdach nach Anspruch 1, dadurch gekennzeichnet, daß das plattenförmige Element (20) einstückig mit dem Klappdach (5) ausgebildet ist.

5. Klappdach nach Anspruch 1, dadurch gekennzeichnet, daß das plattenförmige Element (20) durch ein separates Teil gebildet wird, das durch Kleben, Schweißen oder dergleichen mit dem Klappdach (5) verbunden ist.

6. Klappdach nach Anspruch 5, dadurch gekennzeichnet, daß das plattenförmige Element (20) als Hohlträger (24) ausgebildet ist.

7. Klappdach nach Anspruch 6, dadurch gekennzeichnet, daß der Hohlträger (24) ein Mittelteil (25) aufweist, das von einer Oberschale (26) und einer Unterschale (27) umgeben ist, wobei die Oberschale (26) eine Hutablage und die Unterschale (27) abschnittsweise eine Fahrgastraumabdeckung bildet.

8. Klappdach nach Anspruch 1, dadurch gekennzeichnet, daß am Mittelteil (25) zumindest an seinen beiden seitlich außenliegenden Endbereichen ein die Drehachse (15) bildendes Lagerelement (31) vorgesehen ist, das mit aufbauseitig angeordneten Drehlagern zusammenwirkt.

9. Klappdach nach den Ansprüchen 1 und 2, dadurch gekennzeichnet, daß die Drehachse (15) des Klappdachs (5) - in einer Fahrzeuglängsmittelebene gesehen - in einer Symmetrieebene des plattenförmigen Elementes (20) verläuft.

10. Klappdach nach Anspruch 1, dadurch gekennzeichnet, daß das plattenförmige Element (20) - in einer Fahrzeuglängsmittelebene gesehen - an seinen beiden in Fahrzeuglängsrichtung verlaufenden Enden je eine Aufnahme (40, 41) aufweist, wobei je nach Stellung des Klappdaches (5) eine dieser Aufnahmen (40, 41) eine Anlagefläche für einen Dichtkörper (42) des angrenzenden Heckdeckels (6) bildet.

11. Klappdach nach Anspruch 1, dadurch gekennzeichnet, daß ein einer Heckscheibe (19) abgekehrtes Ende (37) des plattenförmigen Elementes (20) benachbart einer Rückenlehne (38) eines angrenzenden Sitzes verläuft.

12. Klappdach nach den Ansprüchen 1 und 10, dadurch gekennzeichnet, daß das plattenförmige Element (20) in seitlich außenliegenden Bereichen (43) spiegelbildlich zur Drehachse (15) verlaufende, bogenförmige Endabschnitte (44, 45) aufweist, an denen die Aufnahmen (40, 41) angeordnet sind.

## Claims

1. A solid folding roof (5) for a passenger car, extending from a windscreen frame (3) as far as a tail flap (6) and being pivotable from a closed position (C) into an open position (D) and *vice versa* about a fixed axis of rotation (15) which extends transversely to the longitudinal direction (E) of the vehicle, a lower edge (17) of a cupola-shaped end region (16) of the folding roof (5) which extends substantially behind a side door (4) as viewed in the direction of travel (E) extending up to the tail flap (6), characterized in that a plate-shaped member (20) orientated substantially horizontally and rigidly connected to the folding roof (5) at least by an end towards the rear as viewed in the direction of travel is arranged adjacent to the lower edge (17) of the curved end region (16), the plate-shaped element (20) preferably extending over the entire width of the curved end region (16).

2. A folding roof according to Claim 1, characterized in that the axis of rotation (15) of the folding roof (5) extends inside plate-shaped element (20), the axis of rotation (15) lying substantially in a median plane (J-J) of plate-shaped element (20).

3. A folding roof according to Claim 1, characterized in that in the closed position (C) of the folding roof (5) an upper boundary face (33) of the plate-shaped element (20) forms a shelf area (34), whereas a boundary face (35) of the plate-shaped element (20) lying on the outside in the open position (D) of the folding roof (5) constitutes a covering (36) lying in front of the tail flap (6) as viewed in the direction of travel (E).

4. A folding roof according to Claim 1, characterized in that the plate-shaped element (20) is constructed integrally with the folding roof (5).

5. A folding roof according to Claim 1, characterized in that the plate-shaped element (20) is formed by a separate part connected by adhesion, welding or the like to the folding roof (5).

6. A folding roof according to Claim 5, characterized in that the plate-shaped element (20) is constructed as a hollow support (24).

7. A folding roof according to Claim 6, characterized in that the hollow support (24) has a middle part (25) which is surrounded by an upper shell (26) and a lower shell (27) the upper shell (26) forming a shelf area for hats and the lower shell (27) forming in part a passenger compartment covering.

8. A folding roof according to Claim 1, characterized in that a bearing element (31) forming the axis of rotation (15) and cooperating with pivot bearings mounted on the body is provided on the middle part (25) at least at its two end areas lying on the outside laterally.

9. A folding roof according to Claims 1 and 2, characterized in that the axis of rotation (15) of the folding roof (5) extends in a plane of symmetry of the plate-shaped element (20) as viewed in a longitudinal median plane of the vehicle.

10. A folding roof according to Claim 1, characterized in that the plate-shaped element (20) is provided with one receiving means (40, 41) at each of its two ends extending in the longitudinal direction of the vehicle as viewed in a longitudinal median plane of the vehicle, one of these receiving means (40, 41) forming an abutment surface for a sealing member (42) of the adjacent tail flap (6), depending upon the position of the folding roof (5).

11. A folding roof according to Claim 1, characterized in that one end (37) of the plate-shaped element (20) remote from a rear window (19) extends adjacent to a back rest (38) of an adjacent seat.

12. A folding roof according to Claims 1 and 10, characterized in that the plate-shaped element (20) comprises curved end portions (44, 45) which extend symmetrically about the axis of rotation (15) in areas (43) lying on the outside laterally and on which the receiving means (40, 41) are mounted.

**Revendications**

1. Toit rabattable rigide (5) pour voiture particulière, qui s'étend d'un cadre de pare-brise (3) jusqu'à un capot arrière (6) et est susceptible de pivoter, d'une position fermée (C) à une position ouverte (D) , autour d'un axe de rotation fixe (15) s' étendant transversalement à la direction longitudinale du véhicule (E) , et inversement, une zone d'extrémité (16), en forme de coupole du toit rabattable (5), s'étendant sensiblement derrière une portière latérale (4), vu dans le sens de la marche (E) , étant amenée avec un bord inférieur (17) sur le capot de coffre (6), caractérisé en ce qu'un élément en forme de plaque (20) est disposé voisin du bord inférieur (17) de la zone d'extrémité (16) en forme de coupole, en étant orienté à peu près horizontalement et est relié fermement au toit rabattable (5) au moins à une extrémité situé à l'arrière lorsqu'on observe dans le sens de déplacement , 1'élément en forme de plaque (20) s'étendant sur toute la largeur de la zone d'extrémité (16) en forme de plaque.

2. Toit rabattable selon la revendication 1, caractérisé en ce que l'axe de rotation (15) du toit rabattable (5) s'étend à l'intérieur de l'élément en forme de plaque (20) et est disposé à peu près dans un plan médian (J-J) de l'élément (20) en forme de plaque.

3. Toit rabattable selon la revendication 1, caractérisé en ce qu'en position de fermeture (C) du toit rabattable (5), une face de délimitation (33) de l'élément (20) en forme de plaque forme une surface de rangement (34) , que par contre une surface de délimitation (35) de l'élément (20) en forme de plaque, située à l'extérieur dans la position ouverte (D) du toit rabattable (5), présente un recouvrement (36) situé devant le capot arrière (6) lorsqu'on observe dans le sens de déplacement (E).

4. Toit rabattable selon la revendication 1, caractérisé en ce que l'élément en forme de plaque (20) est réalisé d'une seule pièce avec le toit rabattable (5).

5. Toit rabattable selon la revendication 1, caractérisé en ce que l'élément en forme de plaque (20) est formé par une partie séparée qui est reliée au toit rabattable (5), par collage, soudage ou procédé analogue.

6. Toit rabattable selon la revendication 5, caractérisé en ce que l'élément en forme de plaque (20) est réalisé sous forme de poutre creuse (24).

7. Toit rabattable selon la revendication 6, caractérisé en ce que la poutre creuse (24) présente une partie médiane (25) qui est entourée par une coquille supérieure (26) et une coquille inférieure (27), la coquille supérieure (26) formant un rangement à chapeau et la coquille inférieure (27) formant par parties un recouvrement de l'habitable.

8. Toit rabattable selon la revendication 1, caractérisé en ce que sur la partie médiane (25) est prévu au mois sur ses deux zones d'extrémité extérieures latérales un élément de palier (31), formant l'axe de rotation (15), qui coopère avec des paliers de rotation disposés du côté du châssis.

9. Toit rabattable selon les revendications 1 et 2, caractérisé en ce qu'en observant dans un plan médian longitudinal du véhicule, l'axe de rotation (15) du toit rabattable (5) s'étend dans un plan de symétrie de l'élément en forme de plaque (20).

10. Toit rabattable selon la revendication 1, caractérisé en ce qu'en observant dans un plan médian longitudinal du véhicule, l'élément en forme de plaque (20) présente sur chacune de ses deux extrémités s'étendant en direction longitudinale du véhicule un logement (40,41), dont l'un d'entre eux forme, suivant la position du toit rabattable (5) une surface d'appui pour un joint d'étanchéité (42) du capot de coffre (6) adjacent.

11. Toit rabattable selon la revendication 1, caractérisé en ce qu'une extrémité (37) , opposée à une vitre arrière (19), de l'élément en forme de plaque (20) s'étend au voisinage d'un dossier (38) d'un siège adjacent.

12. Toit rabattable selon les revendications 1 et 10, caractérisé en ce que dans les zones latéralement à l'extérieur (43) l'élément en forme de plaque (20) s'étend selon une symétrie par rapport à un plan par rapport à l'axe de rotation (15), en présentant des sections d'extrémité en forme d'arc, sur lesquelles sont disposés les logements (40,41).

FIG.1

EP 0 277 295 B1

FIG.2

EP 0 277 295 B1

FIG.3

EP 0 277 295 B1

FIG.4

FIG.5